(19) Europäisches Patentamt
European Patent Office
Office européen des brevets

(11) **EP 4 494 800 A1**

(12) **EUROPEAN PATENT APPLICATION**
published in accordance with Art. 153(4) EPC

(43) Date of publication:
**22.01.2025 Bulletin 2025/04**

(21) Application number: **23839323.5**

(22) Date of filing: **29.05.2023**

(51) International Patent Classification (IPC):
**B23K 11/16** (2006.01)   **B23K 11/24** (2006.01)

(52) Cooperative Patent Classification (CPC):
**B23K 11/16; B23K 11/24**

(86) International application number:
**PCT/JP2023/019968**

(87) International publication number:
**WO 2024/014146 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.07.2022   JP 2022112894**

(71) Applicant: **JFE Steel Corporation
Tokyo 100-0011 (JP)**

(72) Inventors:
• **KAWABE, Nao
Tokyo 100-0011 (JP)**
• **SAWANISHI, Chikaumi
Tokyo 100-0011 (JP)**
• **TANIGUCHI, Koichi
Tokyo 100-0011 (JP)**
• **TAKASHIMA, Katsutoshi
Tokyo 100-0011 (JP)**

(74) Representative: **Haseltine Lake Kempner LLP
Bürkleinstrasse 10
80538 München (DE)**

(54) **RESISTANCE SPOT WELDING METHOD**

(57)     It is an object to provide a resistance spot welding method. The present invention is a resistance spot welding method for joining two or more steel sheets including at least one zinc-based coated steel sheet. In a first energization step, a nugget having a nugget diameter of 3.0√t mm or more and 4.5√t mm or less is formed. A second energization step is a multistage step including first to n-th stages each including a cooling step of maintaining a non-energization state for 10 ms or longer and shorter than 160 ms and an energization step of energizing the steel sheets for 20 ms or longer and shorter than 200 ms. The current values in the energization steps in the energization stages in the multistage step satisfy formulas (1) and (2), and the current value I1 in the first stage is equal to or more than the current value in the first energization step.

$$I1 \leq I2 \leq \cdots \leq In \qquad (1)$$

$$I1 < In \qquad (2)$$

FIG. 2

**Description**

Technical Field

The present invention relates to a resistance spot welding method.

Background Art

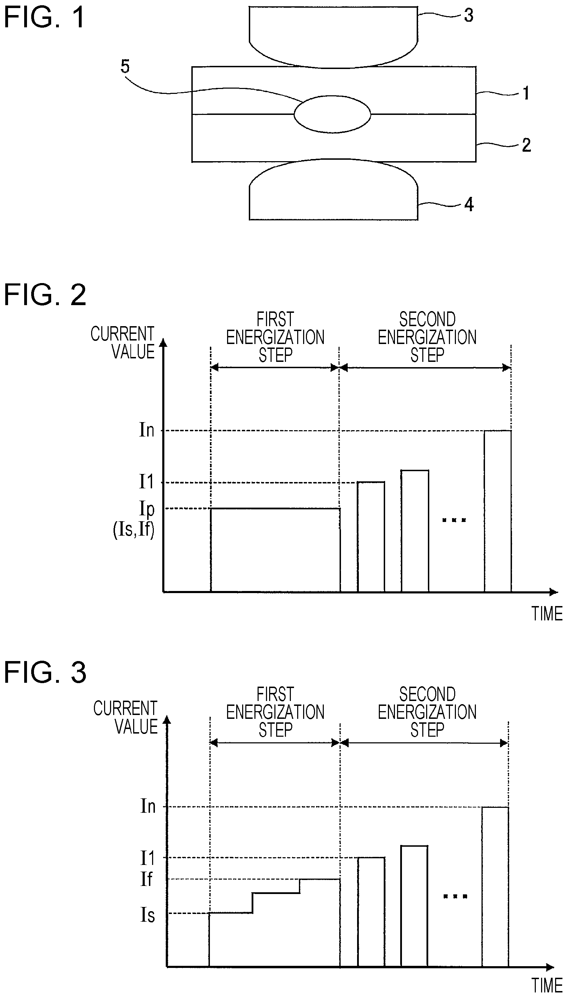

Generally, to join two or more overlapping steel sheets together, a resistance spot welding method, which is one type of lap resistance welding method, is used. As shown in Fig. 1, in this welding method, two steel sheets 1 and 2 are disposed so as to overlap each other to obtain a sheet set, and the upper and lower sides of the sheet set are held between a pair of electrodes 3 and 4. A welding current is applied between the pair of upper and lower electrodes 3 and 4 to join the steel sheets together while the sheet set is pressed from the upper and lower sides using the pair of electrodes. The resistance heat generated by the welding current applied is used to obtain a spot-shaped weld 5. The spot-shaped weld 5 is referred to as a nugget. The nugget is a portion formed when the overlapping steel sheets 1 and 2 are melted at their contact portions due to the welding current applied to the steel sheets and then solidified, and the steel sheets are thereby joined together at the welded spot. In Fig. 1, the two overlapping steel sheets are shown as an example.

However, one problem with the resistance spot welding of a sheet set prepared by disposing a plurality of steel sheets including a surface-treated steel sheet so as to overlap each other is that cracking may occur in the weld. The surface-treated steel sheet is a steel sheet having a metal coated layer on the surface of a base material (base steel sheet). Examples of the metal coating include: zinc coatings typified by electrogalvanized coatings and hot-dip galvanized coatings (including hot-dip galvannealed coatings); and zinc alloy coatings containing, in addition to zinc, another element such as aluminum or magnesium. The melting points of the zinc coatings and the zinc alloy coatings are lower than the melting point of the base material, and therefore the following problem occurs.

It has been considered that the cracking in the weld is caused by so-called liquid metal embrittlement. Specifically, the low-melting point metal coated layer on the surface of the steel sheet melts during welding. When the welding pressure from the electrodes and tensile stress due to thermal expansion and contraction of the steel sheets are applied to the weld, the molten low-melting point metal penetrates into grain boundaries of the base material of the surface-treated steel sheet and causes a reduction in grain boundary strength, and the cracking thereby occurs.

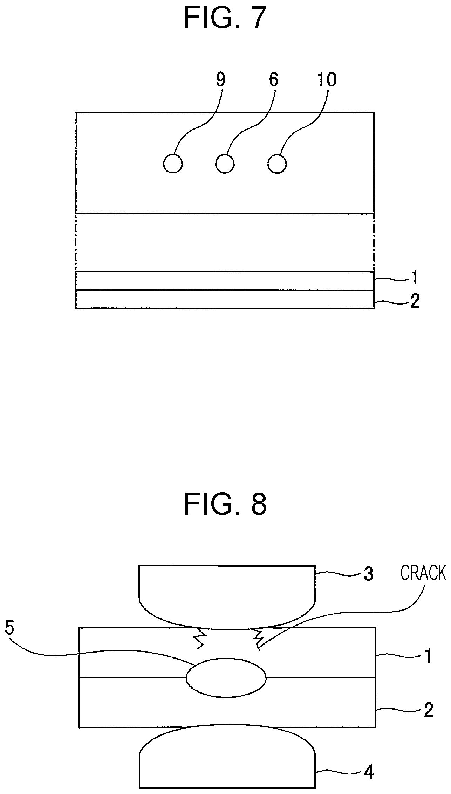

The above cracking is likely to occur when large deformation occurs in the weld. For example, when welding is performed under the conditions under which splashes are generated, cracking is likely to occur at the surfaces of the steel sheets 1 and 2 that are in contact with the electrodes 3 and 4, as shown in Fig. 8. From the viewpoint of ensuring sufficient joint strength, it is important to form a nugget having a large nugget diameter. In actual operations, due to the influences of a shunt current to a spot weld present near a region to be welded and of work disturbances such as wear of the electrodes due to continuous spot welding, a sufficient current density cannot be ensured in the region to be welded in some cases. In such cases, the amount of heat input decreases, and it is difficult to ensure the prescribed nugget diameter. When the current value during welding is set high with consideration given to the case in which the amount of heat input decreases, a nugget having a large nugget diameter can be formed. However, in this case, large deformation of the weld, typified by splashes, occurs, and the risk of cracking increases. As described above, in actual operations, it is difficult to stably obtain a nugget having a large nugget diameter while the occurrence of cracking during welding is reduced, and this is one practical problem with the surface-treated steel sheets.

For example, Patent Literature 1 to Patent Literature 4 propose techniques for addressing the foregoing problem. Patent Literature 1 proposes a method for spot-welding high strength coated steel sheets. In this method, the welding energization time and the holding time after the welding energization are appropriately controlled to reduce the occurrence of cracking.

In Patent Literature 2, energization is performed using an energization pattern including three or more stages. The welding conditions such as the energization time and the welding current are controlled such that an appropriate current range is 1.0 kA or more and preferably 2.0 kA or more, and a cooling time is provided between the stages. With the proposed method, the occurrence of cracking can be reduced. The "appropriate current range" is a current range in which a nugget having a desired diameter or more and a melting residual thickness of 0.05 mm or more can be formed stably.

Patent Literature 3 proposes a method in which the holding time after energization is adjusted appropriately to reduce the occurrence of cracking.

Patent Literature 4 proposes a method in which, after primary energization is performed to form a nugget, secondary energization that does not allow the nugget to grow is performed for a short time to thereby improve the cross tension strength of the joint.

Citation List

Patent Literature

PTL 1: Japanese Unexamined Patent Application Publication No. 2003-103377
PTL 2: Japanese Unexamined Patent Application Publication No. 2003-236676
PTL 3: Japanese Unexamined Patent Application Publication No. 2017-47476
PTL 4: Japanese Unexamined Patent Application Publication No. 2012-187639

Summary of Invention

Technical Problem

However, in Patent Literature 1 and Patent Literature 2, no studies have been conducted on the influence of work disturbances. In consideration of the actual operations in the assembly of automobiles, these measures are insufficient in some cases.

Patent Literature 3 is the technique that can reduce cracking that occurs during the period of time from the completion of energization to the time at which the electrodes are released. However, there is no description of cracking that occurs during energization, and it is difficult to reduce such cracking in some cases.

In Patent Literature 4, there is no description of cracking during welding. Under the conditions under which a large nugget diameter is formed in the primary energization, the deformation of the surfaces of the steel sheets is large, and cracking occurs in some cases.

The above problem, i.e., the fact that it is difficult to form a nugget having a large nugget diameter stably while the occurrence of cracking in the surface-treated steel sheet is reduced during welding, is present not only when steel sheets for automobiles are resistance-spot-welded but also when other steel sheets are resistance-spot-welded.

The present invention has been made in view of the foregoing circumstances, and it is an object to provide a resistance spot welding method with which a nugget having a large nugget diameter can be formed stably while the occurrence of cracking in the surface-treated steel sheet during welding is reduced.

Solution to Problem

The present inventors have conducted extensive studies to achieve the above object.

The cracking during welding is likely to occur when the weld is largely deformed. Therefore, if the nugget can be increased in size while its deformation is reduced as much as possible, the occurrence of cracking during welding can be reduced. With this method, a nugget having a large nugget diameter can be formed stably. One cause of the deformation of the weld is the occurrence of splashes. It has been found that reducing the occurrence of large splashes (i.e., splashes containing a large amount of liquid metals) is effective in reducing the occurrence of cracking during welding.

A resistance spot welding step is divided into two steps including a first energization step and a second energization step. In the first energization step, the energization is performed such that no extreme deformation occurs to thereby form a nugget having a certain nugget diameter. In this case, since the current value is adjusted in order to reduce the deformation, the nugget formed is not sufficiently large. A problem that can occur in this case is that, when, for example, disturbances that cause the nugget diameter to decrease are present, the nugget formed cannot have the prescribed nugget diameter. Therefore, in the second energization step, the nugget is increased in size while the energization conditions are controlled such that the weld is not largely deformed. In this manner, while the occurrence of cracking during resistance spot welding is reduced, the nugget formed can stably have a large nugget diameter.

The energization conditions in the first energization step and the second energization step are shown below.

In the first energization step, it is important to form a weld such that large deformation will not occur in the subsequent second energization step. In this step, a current value and an energization pattern are controlled to control the heat input so that a pressure welded portion (a corona bond portion) around the nugget can be firmly joined. In this manner, the amount of splashes (the amount of molten metal splashes) in the subsequent second energization step can be reduced. Therefore, the deformation of the weld is small, and the occurrence of cracking can be reduced.

In the second energization step, the energization is performed using a current value larger than the current value in the first energization step to thereby increase the size of the nugget. However, if the energization is performed for a long time, the heat input is excessively large, and the weld is largely deformed. Therefore, an energization pattern in which short-term energization and short-term cooling are repeated is used. In this case, the nugget can be increased in size in a stepwise manner while the deformation of the nugget is reduced, so that the occurrence of cracking during welding can be reduced. With this energization pattern, even when splashes are generated, the amount of the splashes (i.e., the amount of molten metal splashes) during the short-term energization is small. Therefore, the deformation of the weld is small, and the occurrent of cracking during welding can be reduced. In this case, by gradually increasing the current value in the repeated energization in the second energization step, the size of the nugget can be increased effectively, i.e., the nugget diameter can be increased while the amount of splashes is reduced.

The present invention has been made based on the above findings and is summarized as follows.

[1] A resistance spot welding method including: disposing two or more steel sheets including at least one zinc-based coated steel sheet so as to overlap each other; and joining the steel sheets together by resistance spot welding,

wherein the resistance spot welding includes a first energization step and a second energization step,
wherein, in the first energization step, a current value and an energization time are set such that a nugget having a nugget diameter of 3.0√t (mm) or more and 4.5√t (mm) or less is formed, where t is the thickness (mm) of a thinnest steel sheet among the overlapping steel sheets,
wherein the second energization step is multistage energization including first to n-th stages (n is an integer of 2 or more) each including a cooling step of maintaining a non-energization state for 10 ms or longer and shorter than 160 ms and an energization step of energizing the steel sheets for 20 ms or longer and shorter than 200 ms,
wherein, in the multistage energization, a current value in the energization step in the first stage is denoted as I1 (kA), and a current value in the energization step in the n-th stage is denoted as In (kA), and
wherein the current value I1 in the first stage is equal to or more than the current value in the first energization step, and the current values I1 to In in the first to n-th stages satisfy formulas (1) and (2):

$$I1 \leq I2 \leq \cdots \leq In, \quad (1)$$

$$I1 < In. \quad (2)$$

[2] The resistance spot welding method according to [1], wherein, in the first energization step, a current value at a start of energization is denoted as Is (kA), and a current value at an end of the energization is denoted as If (kA), and

wherein the energization in the first energization step is performed such that the current value is constant from the start of the energization to the end of the energization, or
the energization in the first energization step is performed while the current value is changed such that the current value Is at the start of the energization and the current value If at the end of the energization satisfy formula (3):

$$If > Is. \quad (3)$$

[3] The resistance spot welding method according to [2], wherein, when the energization in the first energization step is performed while the current value is changed, the first energization step is multistage energization including first to m-th stages (m is an integer of 2 or more),

wherein current values in the first to m-th stages in the multistage energization are denoted as I1' to Im' (kA), the current value I1' in the first stage being the same as the current value Is at the start of the energization, the current value Im' in the m-th stage being the same as the current value If at the end of the energization, and
wherein the current values I1' to Im' in the first to m-th stages in the multistage energization satisfy formula (4) :

$$I1' < I2' < I3' < \cdots < Im'. \quad (4)$$

[4] The resistance spot welding method according to [2], wherein, when the energization in the first energization step is performed while the current value is changed, the energization is upslope energization in which the current value is continuously increased from the current value Is at the start of the energization to the current value If at the end of the energization.

[5] The resistance spot welding method according to any one of [1] to [4], wherein the diameter of a nugget formed at the completion of the first energization step is denoted as N1 (mm), and the diameter of the nugget formed at the completion of the first energization step and the second energization step is denoted as N2 (mm), and

wherein the amount of increase in the diameter of the nugget in the second energization step is represented by (N2 - N1) and is 0.1√t (mm) or more.

[6] The resistance spot welding method according to any one of [1] to [5], wherein the zinc-based coated steel sheet is a high strength steel sheet having a Ceq represented by formula (5) of 0.20% or more and a tensile strength of 780 MPa or more:

$$Ceq\ (\%)\ =\ C\ +\ Si/30\ +\ Mn/20\ +\ 2P\ +\ 4S,\qquad (5)$$

where element symbols in formula (5) represent the contents (% by mass) of respective elements.

Advantageous Effects of Invention

According to the present invention, a nugget having a large nugget diameter can be stably formed while the occurrence of cracking in the surface-treated steel sheet during welding is reduced, so that industrially significant effects are obtained.

Brief Description of Drawings

[Fig. 1] Fig. 1 is a cross-sectional view schematically showing an example of resistance spot welding in the invention.
[Fig. 2] Fig. 2 is a graph illustrating a first embodiment of an energization pattern in the resistance spot welding method of the invention.
[Fig. 3] Fig. 3 is a graph illustrating a second embodiment of the energization pattern in the resistance spot welding method of the invention.
[Fig. 4] Fig. 4 is a graph illustrating a third embodiment of the energization pattern in the resistance spot welding method of the invention.
[Fig. 5] Fig. 5 is an illustration of a test specimen for resistance spot welding in Examples of the invention, the upper part showing a plan view, and the lower part showing a side view.
[Fig. 6] Fig. 6 is an illustration of a test specimen for resistance spot welding in the Examples of the invention, the upper part showing a plan view, and the lower part showing a side view.
[Fig. 7] Fig. 7 is an illustration of a test specimen for resistance spot welding in the Examples of the invention, the upper part showing a plan view, and the lower part showing a side view.
[Fig. 8] Fig. 8 is a cross-sectional view schematically showing an example of the occurrence of cracking during conventional resistance spot welding.

Description of Embodiments

Referring to the drawings, embodiments of the invention will be described. However, the invention is not limited to the following embodiments.
In the resistance spot welding method of the invention, two or more steel sheets including at least one zinc-based coated steel sheet are disposed so as to overlap each other to thereby form a sheet set. Then the sheet set is held between a pair of welding electrodes and energized under welding conditions described later under the application of pressure. A nugget is thereby formed between the steel sheets by resistant heating, and the overlapping steel sheets are joined together. With this resistance spot welding method, even when the sheet set includes the zinc-based coated steel sheet, a welded joint can be produced. Specifically, while the occurrence of cracking during resistance spot welding is reduced, a nugget having a large nugget diameter can be stably formed.
First, the welding conditions in the resistance spot welding method of the invention will be described.
In the present invention, a resistance spot welding step includes a first energization step and a second energization step. In the first energization step, a weld having a nugget diameter of $3.0\sqrt{t}$ (mm) or more and $4.5Vt$ (mm) or less is formed. The second energization step includes a plurality of stages each including a cooling step of maintaining a non-energization state and an energization step of performing energization in a specific pattern, and the nugget formed in the first energization step is thereby increased in size.

<First energization step>

In the first energization step, the steel sheets are energized with at least a current value Ip (kA) and an energization time tp (ms) set such that a nugget having a nugget diameter of $3.0\sqrt{t}$ (mm) or more and $4.5\sqrt{t}$ (mm) or less is formed, where t is the thickness (mm) of a thinnest steel sheet among the overlapping steel sheets. In this case, the energization conditions are set such that the nugget is formed without the occurrence of splashes. The target nugget diameter used to set the current value Ip (kA) and the energization time tp is the nugget diameter when the welding is performed with no disturbances.

If the diameter of the nugget formed in the first energization step is less than 3.0√t (mm), the diameter of the nugget formed is too small, so that it is difficult to effectively increase the size of the nugget sufficiently in the subsequent second energization step. It is therefore difficult for the nugget obtained to have a large nugget diameter. If the diameter of the nugget formed is more than 4.5Vt (mm), the heat input during the energization is excessively large. In this case, the weld deforms, and cracking is likely to occur. Therefore, the diameter of the nugget formed in the first energization step is 3.0√t (mm) or more and 4.5Vt (mm) or less.

The diameter of the nugget formed in the first energization step is preferably in the range of 4.0√t (mm) to 4.5Vt (mm). When the diameter of the nugget is within the range of 4.0√t (mm) to 4.5Vt (mm), the effect of increasing the size of the nugget without the occurrence of cracking in the subsequent second energization step can be achieved more significantly.

The symbol "t" represents the thickness (mm) of a steel sheet. Specifically, the thickness of the thinnest steel sheet among the overlapping steel sheets in the sheet set is denoted as t. For example, when the thicknesses of the plurality of steel sheets forming the sheet set differ from each other, the thickness of the thinnest steel sheet is defined as t. The current value and the energization time in the first energization step are set such that the smallest nugget diameter among the diameters of a plurality of nuggets formed at faying surfaces of the overlapping steel sheets becomes 3.0√t (mm) or more and 4.5Vt (mm) or less.

The welding conditions including the current value, the energization time, and the welding pressure in the first energization step can be appropriately selected such that the nugget diameter described above can be obtained. For example, from the viewpoint of forming the nugget having the nugget diameter described above without the occurrence of splashes, it is preferable that the welding conditions for the resistance spot welding in the first energization step are appropriately selected according to the sheet set as follows. The current value Ip is selected from the range of 4 to 10 kA, and the energization time tp is selected from the range of 100 to 500 ms. The welding pressure is selected from the range of 1.5 kN to 8.0 kN.

In the present invention, the first energization step may be controlled according to any of the following energization patterns. Specifically, in addition to the welding conditions in the first and second energization steps described above, the energization in the first energization step may be performed such that the current value is constant from the start of the energization to the end of the energization, or the energization in the first energization step may be performed while the current value is changed such that the current value at the start of the energization and the current value at the end of the energization satisfy formula (3) described later.

Using Figs. 2 to 4, three energization patterns will be described as preferred embodiments of the first energization step. The second energization step will be described later, and its description is omitted.

[First energization pattern] (preferred conditions)

Referring to Fig. 2, an example in which the current value Ip in the first energization step is set to be constant (i.e., a constant current is used) will be described as a first energization pattern.

As shown in Fig. 2, in the first energization step, the current value at the start of the energization is denoted as Is (kA), and the current value at the end of the energization is denoted as If (kA). Then the energization may be performed such that the current value Is at the start of the energization and the current value If at the end of the energization are the same. As a result of the energization, a weld having a nugget diameter of 3.0√t (mm) or more and 4.5Vt (mm) or less is formed. The phrase "the current value is set to be constant" means that the current value is not changed from the start of the energization to the end of the energization but is set to be constant during the energization.

[Second and third energization patterns] (preferred conditions)

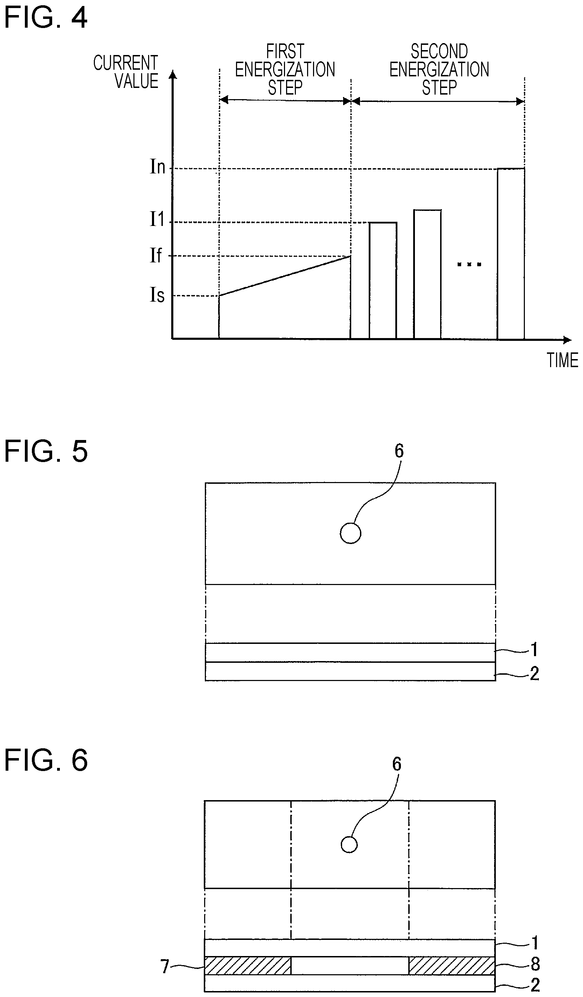

Referring to Figs. 3 and 4, examples in which the current value Ip in the first energization step is changed will be described as the second and third energization patterns.

In the first energization step, the current value at the start of the energization is denoted as Is (kA), and the current value at the end of the energization is denoted as If (kA). Then the current value during the energization may be changed such that the current value Is at the start of the energization and the current value If at the end of the energization satisfy formula (3). As a result of the energization, a weld having a nugget diameter of 3.0√t (mm) or more and 4.5Vt (mm) or less is formed.

$$If > Is \qquad (3)$$

In the present invention, it is important that the weld be formed in the first energization step such that the weld will not be largely deformed in the subsequent second energization step, as described above. To avoid the deformation, the energization current in the first energization step is changed, i.e., controlled, so as to satisfy formula (3).

Examples of the control method in which the current is changed include "multistage energization (see Fig. 3)" and "upslope energization (see Fig. 4)." By controlling the energization such that the current increases, a pressure welded portion around the nugget can be more firmly joined in the first energization step, and the occurrence of splashes in the subsequent second energization step can be reduced. Even when splashes occur, the amount of splashes can be reduced. In this manner, the deformation of the weld is small, and therefore the occurrence of cracking can be reduced.

Specific examples will be described.

[Second energization pattern: multistage energization]

As shown in Fig. 3, when the current for the energization is changed in the first energization step, the energization in the first energization step may be multistage energization including first to m-th stages (m is an integer of 2 or more). In the multistage energization, the current values in the energization stages are denoted as I1' to Im' (kA). The current value I1' (kA) in the first stage is set to be equal to the current value Is at the start of the energization(kA), and the current value Im' (kA) in the m-th stage is set to be equal to the current value If (kA) at the end of the energization. Then the energization is controlled such that the current values I1' to Im' in the energization stages in the multistage energization in the first energization step satisfy formula (4) .

$$I1' < I2' < I3' < \cdots < Im' \qquad (4)$$

In the multistage energization including the first to m-th stages, if the current value I1' (kA) in the first stage, the current value I2' (kA) in the second stage, the current value I3' (kA) in the third stage,..., and the current value Im' (kA) in the m-th stage (final stage) do not satisfy formula (4), the heat input to the pressure welded portion is insufficient. In this case, the pressure welded portion around the nugget cannot be firmly joined in the first energization step, and the effect of reducing the amount of splashes that may occur in the subsequent second energization step cannot be obtained. Moreover, it is difficult to grow the nugget sufficiently, and the dimeter of the nugget obtained may not be within the above-described range.

When the multistage energization is used, it is preferable that the energization time in the first energization step is controlled such that the sum of the energization times in the energization stages is within the energization time tp described above (100 to 500 ms).

The symbol "m" indicating the multistage is an integer of 2 or more. From the viewpoint of avoiding excessively complicated management of the welding conditions during the welding operation, m is preferably 5 or less.

[Third energization pattern: upslope energization]

As shown in Fig. 4, the energization in the first energization step may be upslope energization in which the current value is continuously increased from the current value Is at the start of the energization to the current value If at the end of the energization. In this manner, the pressure welded portion around the nugget is firmly joined in the first energization step, and the amount of splashes in the subsequent second energization step can be reduced. In this case, the deformation of the weld is small, and therefore the occurrence of cracking can be reduced.

<Second energization step>

After the first energization step described above, the second energization step is performed. In this case, it is important that the current value during the repeated energization in the second energization step be increased gradually. By increasing the current value gradually, the size of the nugget can be effectively increased.

To reduce the amount of splashes in the second energization step, it is effective to increase the size of the nugget in a stepwise manner in multiple stages in the repeated energization. If the current value in the repeated energization is constant, the effect of increasing the size of the nugget is large in the first half of the repeated energization, but the effect is relatively small in the second half. However, by increasing the current value gradually in the repeated energization, the effect of increasing the size of the nugget in a stepwise manner can be achieved significantly in both the first and second halves of the repeated energization.

Specifically, the second energization step is a multistage step including first to n-th stages (n is an integer of 2 or more) each including a cooling step of maintaining a non-energization state for 10 ms or longer and shorter than 160 ms and an energization step of performing energization for 20 ms or longer and shorter than 200 ms. In the multistage step, the current value in the energization step in the first stage is denoted as I1 (kA), and the current value in the energization step in the n-th stage (final stage) is denoted as In (kA). Then the current value I1 in the first stage is equal to or higher than the current value in the first energization step, and the current values I1 to In in the above stages are adjusted so as to satisfy formulas (1) and (2).

$$I1 \leq I2 \leq I3 \leq \cdots \leq In \qquad (1)$$

$$I1 < In \qquad (2)$$

"The current value in the first energization step" in the above phrase "the current value I1 in the first stage is equal to or higher than the current value in the first energization step" is "the current value Ip" when a constant current is used (see Fig. 2) and is "the current value If at the end of the energization" when the current is changed (see Figs. 3 and 4).

[Cooling step]

If the non-energization time in the cooling step is shorter than 10 ms, the cooling effect is insufficient, and the weld is likely to deform largely, so that cracking tends to occur. If the non-energization time is 160 ms or longer, the effect of the multistage energization, i.e., the effect of increasing the size of the nugget by repeated energization, is not sufficient. Therefore, the non-energization time in the cooling step in each stage is set to be 10 ms or longer and shorter than 160 ms. The non-energization time is preferably 10 to 120 ms.

[Energization step]

If the energization time in the energization step is shorter than 20 ms, the heat input is insufficient, so that the effect of increasing the size of the nugget cannot be achieved sufficiently. If the energization time is 200 ms or longer, an excessively large heat input is applied in one energization operation. In this case, the weld is likely to deform largely, and cracking tends to occur. Therefore, the energization time in the energization step in each stage is 20 ms or longer and shorter than 200 ms

In the present invention, the size of the nugget is increased in the second energization step as described above. To further increase the effect of increasing the diameter of the nugget stably while the deformation of the weld is reduced, the non-energization time in the cooling step in each stage in the second energization step is set to preferably 10 to 80 ms, and the energization time in the energization step is set to preferably 20 to 100 ms. The non-energization time in the cooling step is more preferably 10 ms or longer and shorter than 80 ms, still more preferably 10 to 60 ms, and yet more preferably 10 to 20 ms.

If the current values in the energization steps do not satisfy formulas (1) and (2), the effect of effectively increasing the size of the nugget cannot be achieved.

In the present invention, it is preferable that the current values in the energization steps in the energization stages in the second energization step satisfy the following condition in addition to formula (1).

Specifically, the current value during energization in the k-th stage is denoted as Ik (kA), and the current value during energization in the (k + 1)-th stage is denoted as I(k + 1) (kA). Then it is preferable that $I(k+1) \leq 1.3 \times Ik$. Here, k is an integer of 1 or more and n - 1 or less. When the current values are within the above range, a rapid increase in heat input can be prevented, and the deformation of the weld due to the occurrence of large splashes can be more easily prevented.

The number of steps (the number of stages) in the multistage energization in the second energization step is preferably 2 or more and 10 or less. If the number of stages is more than 10, the effect of increasing the size of the nugget is saturated. In this case, the effect obtained is unlikely to be large, and the total time of the overall welding process is long. Therefore, from the viewpoint of operational efficiency, the number of stages is preferably 10 or less.

<Amount of increase in nugget diameter> (preferred conditions)

The diameter of the nugget formed at the completion of the first energization step is denoted as N1 (mm), and the diameter of the nugget formed at the completion of the first energization step and the second energization step is denoted as N2 (mm). Then, in the present invention, from the viewpoint of allowing the nugget to have a large diameter, it is preferable that the value of (N2 - N1), i.e., the amount of increase in the diameter of the nugget in the second energization step, is $0.1\sqrt{t}$ (mm) or more. The value of (N2 - N1) is more preferably 0.3Vt (mm) or more and still more preferably 0.5Vt (mm) or more.

If the amount of increase in the diameter of the nugget in the second energization step is extremely large, the heat input is excessively large, and the deformation of the weld is large, so that cracking may occur. Therefore, the amount of increase is preferably $3.0\sqrt{t}$ (mm) or less. The value of (N2 - N1) is more preferably 2.5Vt (mm) or less and still more preferably $2.0\sqrt{t}$ (mm) or less.

<Steel sheets>

The present invention is applied to a resistance spot welding method for a sheet set in which the opposite sides of the sheet set to be in contact with the welding electrodes (upper and lower electrodes) disposed on the upper and lower sides of the sheet set or one of the opposite sides of the sheet set is a surface-treated steel sheet having a metal coated layer. "The opposite sides of the sheet set to be in contact with the welding electrodes" are two outermost steel sheets that are included in the sheet set including the plurality of steel sheets and are to be in contact with the upper and lower electrodes. "The one of the opposite sides of the sheet set to be in contact with the welding electrodes" is one of the two outermost steel sheets that are included in the sheet set including the plurality of steel sheets and are to be in contact with the upper and lower electrodes. Preferably, the melting point of the metal coated layer used is lower than the melting point of the base material of the surface-treated steel sheet.

As described above, the surface-treated steel sheet is a steel sheet having a metal coated layer on the surface of the base material (base steel sheet). Examples of the metal coated layer include: zinc coatings typified by electrogalvanized coatings and hot-dip galvanized coatings (including hot-dip galvannealed coatings); and zinc alloy coatings containing, in addition to zinc, another element such as aluminum or magnesium. In the present embodiment, the above-described surface-treated steel sheet is referred to as a "zinc-based coated steel sheet." Therefore, in the present invention, at least one of the plurality of steel sheets included in the sheet set is a zinc-based coated steel sheet.

The above-described zinc-based coated steel sheet is preferably a high strength steel sheet (high strength zinc-based coated steel sheet) having an equivalent carbon content (Ceq)(%) represented by formula (5) below of 0.20% or more and a tensile strength of 780 MPa or more.

$$\text{Ceq (\%) = C + Si/30 + Mn/20 + 2P + 4S} \qquad (5)$$

Here, each element symbol in formula (5) represents the content (% by mass) of the element, and the content is 0 when the element is not contained.

The high strength steel sheet is highly sensitive to cracking, and the occurrence of cracking is likely to cause a problem. Therefore, the effects of the invention can be more effective when the equivalent carbon content is 0.20% or more.

The upper limit of the equivalent carbon content is not particularly specified. Even when the energization pattern in the invention is applied to a steel sheet having an extremely high equivalent carbon content, i.e., extremely sensitive to cracking, the effect of preventing cracking may not be obtained sufficiently. Therefore, the equivalent carbon content (Ceq) is preferably 0.60% or less and more preferably 0.50% or less.

For example, when a sheet set including three or more overlapping steel sheets including at least one zinc-based coated steel sheet is used, it is only necessary that at least one zinc-based coated steel sheet in contact with one of the welding electrodes (the upper and lower electrodes) disposed on the upper and lower sides of the sheet set have an equivalent carbon content of 0.20% or more.

The chemical composition of the high strength zinc-based coated steel sheet used in the present invention may be appropriately adjusted such that the equivalent carbon content (Ceq) is within the above-described range and the above-descried tensile strength is obtained.

In the present invention, no particular limitation is imposed on the thicknesses of the steel sheets to be resistance-spot-welded. The thicknesses are preferably in the range of, for example, 0.5 mm or more and 3.0 mm or less. A steel sheet having a thickness within the above range can be preferably used for automobile members.

The two or more steel sheets to be resistance-spot-welded may be steel sheets of the same type and having the same shape or may be steel sheets of different types and having different shapes. A combination of a surface-treated steel sheet having a metal coated layer and a steel sheet having no metal coated layer may be used.

For example, Fig. 1 shows a sheet set that includes two overlapping steel sheets and is being joined by the resistance spot welding method of the invention. As shown in Fig. 1, a pair of welding electrodes, i.e., a welding electrode 4 (a lower electrode) disposed on the lower side of the sheet set and a welding electrode 3 (an upper electrode) disposed on the upper side of the sheet set, are used to hold therebetween the overlapping steel sheets (a lower steel sheet 2 and an upper steel sheet 1), and the overlapping steel sheets are energized under the welding conditions described above under the application of pressure. The number of overlapping steel sheets is preferably 4 or less.

The apparatus used to perform the resistance spot welding method of the invention and the welding electrodes used may be the following apparatus and electrodes.

No particular limitation is imposed on the structure of the apparatus used to perform the resistance spot welding method of the invention, so long as the apparatus has a structure in which lower and upper electrodes are used for pressurization and the welding pressure during the pressurization can be controlled. For example, a device such as an air cylinder or a servo motor can be used. No particular limitation is imposed on the structure used to supply a current during energization and control the current value. The current used in the invention may be a DC current or an AC current. When an AC current is used, the "current" means an "effective current."

No particular limitation is imposed on the tip type of the upper and lower electrodes. Examples of the tip type include a DR type (dome radius type), an R type (radius type), and a D type (dome type) specified in JIS C9304: 1999. The tip diameter of each electrode is, for example, 4 mm to 16 mm. The radius of curvature of the tip of each electrode is, for example, 10 mm to 400 mm. Flat electrodes having flat tip ends may also be used.

In the above description, the resistance spot welding of two overlapping steel sheets has been mainly described. However, the present invention can be similarly applicable to resistance spot welding of three or more overlapping steel sheets, and the same effects as above can be obtained.

EXAMPLES

The operations and effects of the present invention will be described by way of Examples. However, the present invention is not limited to the following Examples.

In the Examples, two steel sheets including at least one zinc-based coated steel sheet were used and disposed so as to overlap each other to form a sheet set (see Table 1). In the Examples, the upper and lower steel sheets used were each a hot-dip galvannealed (GA) steel sheet or a cold rolled steel sheet. The equivalent carbon content (Ceq) represented by formula (5) above, the tensile strength, and the thickness of each steel sheet are shown in Table 1. Each of the sheet sets was subjected to resistance spot welding under conditions shown in any of Tables 2-1 to 4-2 to produce a welded joint.

Table 2-1 shows welding conditions in which the energization in the first energization step is performed using a constant current value and the energization in the second energization step includes multiple stages each including the cooling step and the energization step. Table 3-1 shows welding conditions in which the energization in the first energization step is performed using different current values (multistage energization) and the energization in the second energization step includes multiple stages each including the cooling step and the energization step. Table 4-1 shows welding conditions in which the energization in the first energization step is performed while the current value is changed (upslope energization) and the energization in the second energization step includes multiple stages each including the cooling step and the energization step.

The "Second energization step" shown in Tables 2-1, 3-1, and 4-1 is a multistage step including first to n-th stages (n is an integer of 2 or more) each including the cooling step and the energization step. In the multistage energization in the "First energization step" shown in Table 3-1, the "Current value I1' (kA) in the first stage" is "the current value Is (kA) at the start of the energization," and the "Current value Im'(kA) in the final stage (m-th stage)" is "the current value If (kA) at the end of the energization." Specifically, in the multistage energization with m = 3, the current value in the third stage, i.e., the final stage, is the current value at the end of the energization.

The resistance spot welding was performed at room temperature, and the welding electrodes (lower and upper electrodes) were water-cooled constantly. The lower and upper electrodes were each a chromium-copper-made DR-type electrode having a tip with a diameter (tip diameter) of 6 mm and a radius of curvature of 40 mm. The upper electrode was driven by a servo motor to control the welding pressure, and a DC power source was supplied during energization.

Three welded joints were produced under the same welding conditions with three different disturbance conditions, i.e., "with no disturbance," "with a sheet gap," and "with existing welds." Each of the welded joints obtained was used to observe the nugget diameter and the presence or absence of cracking (LME cracking).

Referring to Figs. 5 to 7, the production of welded joints with the three different disturbance conditions described above will be described. Each figure shows a test specimen with steel sheets for resistance spot welding overlapping each other. The upper illustration shows a plan view, and the lower illustration shows a side view.

The welded joint in the disturbance condition of "with no disturbance" was produced as follows. As shown in Fig. 5, two steel sheets (an upper steel sheet 1 and a lower steel sheet 2) having a size of 30 mm × 100 mm (short side × long side) and produced from any of the above-described steel sheets were prepared. The steel sheets were disposed so as to overlap each other to obtain a test specimen, and the test specimen was welded under conditions shown in any of Tables 2-1, 3-1, and 4-1 to produce a welded joint having a weld 6 at the center. The weld 6 in the obtained welded joint was used to observe the nugget diameter and the presence or absence of cracking.

The welded joint in the disturbance condition of "with a sheet gap" was produced as follows. As shown in Fig. 6, two steel sheets (an upper steel sheet 1 and a lower steel sheet 2) having a size of 30 mm × 100 mm (short side × long side) and produced from any of the above-described steel sheets were prepared. Spacers 7 and 8 having a thickness of 1.6 mm and a size of 30 mm × 25 mm (long side × short side) were placed between the two steel sheets at opposite edge portions to obtain a test specimen. The test specimen was welded under conditions shown in any of Tables 2-1, 3-1, and 4-1 to produce a welded joint having a weld 6 at the center. The weld 6 in the obtained welded joint was used to observe the nugget diameter and the presence or absence of cracking.

The test specimen in the disturbance condition of "with existing welds" was produced as follows. As shown in Fig. 7, two steel sheets (an upper steel sheet 1 and a lower steel sheet 2) having a size of 30 mm × 100 mm (short side × long side) and produced from any of the above-described steel sheets were prepared. The steel sheets were disposed so as to overlap each other to form the test specimen. Welds 9 and 10 having a nugget diameter of 5 mm were disposed at positions spaced 20 mm from the center of the test specimen in the longitudinal direction. Then the test specimen was welded under conditions shown in any of Tables 2-1, 3-1, and 4-1 to produce a welded joint having a weld 6 at the center. The weld 6 in the obtained welded joint was used to observe the nugget diameter and the presence or absence of cracking.

The nugget diameter, the amount of increase in the nugget diameter, and the presence or absence of cracking were evaluated and judged as follows.

[Evaluation of nugget diameter and amount of increase in nugget diameter]

A welding test including only the first energization step was performed under one of the above disturbance conditions, and then a cross section was observed to measure the nugget diameter (N1) after the first energization step.

In this case, the cross section obtained by cutting the weld was etched and observed under an optical microscope, and the diameter of the nugget between the steel sheets was measured. The measurement value obtained is shown in a "Nugget diameter N1 after first energization step" column in Tables 2-2, 3-2, or 4-2.

A welding test was performed under one of the three disturbance conditions described above, and the welded joint obtained was used to measure the nugget diameter (N2) after the second energization step using the same method as above. The measurement value obtained is shown in a "Nugget diameter N2 after second energization step" column in Table 2-2, 3-2, or 4-2.

A value calculated as (N2 - N1) and indicating the amount of increase in the nugget diameter in the second energization step is shown in an "N2 - N1" column in Table 2-2, 3-2, or 4-2.

[Evaluation of cracking]

The evaluation of cracking (LME cracking) was performed on each of the welded joints obtained from the welding tests performed under the three disturbance conditions described above. A cross section of the weld was observed under an optical microscope. When a crack of 200 um or more was observed on the surface of the weld, the weld was rated "cracked." When a crack of 200 um or more was not observed, the weld was rated "not cracked." When the rating was "cracked," "Yes" was placed in an "LME cracking" column in Table 2-2, 3-2, or 4-2. When the rating was "not cracked," "No" was placed in an "LME cracking" column in Table 2-2, 3-2, or 4-2.

[Judgment]

As for the judgment, welds having a nugget diameter (N2) after the welding of 4.5Vt (mm) or more and not cracked under all the three disturbance conditions were rated "o (pass)." The other welds were rated "× (fail)." The evaluation results are shown in Tables 2-2, 3-2, and 4-2.

In test No. 11 shown in Tables 2-1 and Table 2-2, under the welding conditions used for the sheet set C in the first energization step, the nugget formed was excessively large. Therefore, the nugget diameter (N1) after the first energization step was outside the above-described prescribed range in some cases.

[Table 1]

| Sheet set | Upper steel sheet | | | | Lower steel sheet | | | | Intermediate steel sheet | | | |
|---|---|---|---|---|---|---|---|---|---|---|---|---|
| | Tensile strength (MPa) | Steel sheet | Equivalent carbon content Ceq (%) | Sheet thickness (mm) | Tensile strength (MPa) | Steel sheet | Equivalent carbon content Ceq (%) | Sheet thickness (mm) | Tensile strength (MPa) | Steel sheet | Equivalent carbon content Ceq (%) | Sheet thickness (mm) |
| A | 1470 | GA | 0.40 | 1.4 | 1470 | GA | 0.40 | 1.4 | - | - | - | - |
| B | 780 | GA | 0.30 | 1.4 | 1180 | Cold rolled steel sheet | 0.35 | 1.6 | - | - | - | - |
| C | 1800 | GA | 0.50 | 1.2 | 780 | GA | 0.22 | 1.8 | - | - | - | - |
| D | 590 | GA | 0.19 | 1.4 | 590 | GA | 0.19 | 1.4 | 590 | GA | 0.19 | 1.4 |
| E | 590 | Cold rolled steel sheet | 0.19 | 1.0 | 980 | GA | 0.40 | 1.4 | 1470 | GA | 0.40 | 1.4 |

[Table 2-1]

| Test No. | Sheet set | Welding pressure (kN) | Current value lp (kA) | Energization time tp (ms) | Energization condition | First stage Cooling step Cooling time (ms) | First stage Energization step Current value l1 (kA) | First stage Energization step Energization time (ms) | Second stage Cooling step Cooling time (ms) | Second stage Energization step Current value l2 (kA) | Second stage Energization step Energization time (ms) | Third stage Cooling step Cooling time (ms) | Third stage Energization step Current value l3 (kA) | Third stage Energization step Energization time (ms) | Formula (1) *1 | Number of stages n | Formula (2) 11 < ln *1 |
|---|---|---|---|---|---|---|---|---|---|---|---|---|---|---|---|---|---|
| 1 | A | 4.0 | 6.5 | 150 | Constant | 20 | 8.5 | 40 | 20 | 9.0 | 40 | 20 | 9.5 | 40 | ○ | 3 | ○ |
| a | A | 4.0 | 6.5 | 150 | Constant | 70 | 8.5 | 80 | 70 | 9.0 | 80 | - | - | - | ○ | 2 | ○ |
| b | A | 4.0 | 6.5 | 150 | Constant | 90 | 8.5 | 80 | 70 | 9.0 | 80 | - | - | - | ○ | 2 | ○ |
| 2 | A | 4.0 | 5.0 | 200 | Constant | 20 | 8.5 | 40 | 20 | 9.0 | 40 | 20 | 9.5 | 40 | ○ | 3 | ○ |
| 3 | A | 4.0 | 6.5 | 150 | Constant | 40 | 8.5 | 60 | 20 | 9.0 | 40 | - | - | - | ○ | 2 | ○ |
| 4 | A | 4.0 | 6.5 | 200 | Constant | 20 | 8.5 | 40 | 20 | 8.0 | 40 | - | - | - | × | 2 | × |
| 5 | A | 4.0 | 8.0 | 200 | Constant | - | - | - | - | - | - | - | - | - | - | - | - |
| 6 | A | 4.0 | 7.0 | 200 | Constant | - | - | - | - | - | - | - | - | - | - | - | - |
| 7 | B | 2.5 | 7.5 | 200 | Constant | 20 | 9.0 | 40 | 20 | 9.5 | 40 | 20 | 9.5 | 40 | ○ | 3 | ○ |
| 8 | B | 2.5 | 7.5 | 200 | Constant | 180 | 9.0 | 40 | 180 | 9.5 | 40 | - | - | - | ○ | 2 | ○ |
| c | B | 2.5 | 7.5 | 200 | Constant | 140 | 8.0 | 160 | 20 | 9.5 | 40 | - | - | - | ○ | 2 | ○ |
| d | B | 2.5 | 7.5 | 200 | Constant | 180 | 8.0 | 160 | 20 | 9.5 | 40 | - | - | - | ○ | 2 | ○ |
| 9 | B | 2.5 | 7.5 | 200 | Constant | 60 | 9.0 | 220 | 60 | 9.0 | 220 | - | - | - | ○ | 2 | × |
| 10 | C | 5.0 | 7.0 | 200 | Constant | 60 | 9.0 | 100 | 20 | 9.5 | 40 | - | - | - | ○ | 2 | ○ |
| 11 | C | 5.0 | 8.0 | 200 | Constant | 60 | 9.0 | 100 | 20 | 9.5 | 40 | - | - | - | ○ | 2 | ○ |
| 12 | D | 3.0 | 6.5 | 200 | Constant | 20 | 7.5 | 40 | 20 | 8.0 | 40 | 20 | 8.5 | 40 | ○ | 3 | ○ |
| 13 | E | 5.0 | 7.0 | 300 | Constant | 20 | 7.0 | 40 | 20 | 8.0 | 40 | 20 | 9.0 | 40 | ○ | 3 | ○ |
| e | E | 5.0 | 8.0 | 300 | Constant | 100 | 9.0 | 180 | 20 | 9.5 | 40 | - | - | - | ○ | 2 | ○ |
| f | E | 5.0 | 8.0 | 300 | Constant | 100 | 9.0 | 220 | 20 | 9.0 | 40 | - | - | - | ○ | 2 | × |
| 14 | E | 5.0 | 7.0 | 300 | Constant | 20 | 8.0 | 40 | 20 | 8.0 | 40 | 20 | 8.0 | 40 | ○ | 3 | × |

13

| Test No. | She-et set | Weld-ing pres-sure (kN) | First energization step | | | Second energization step *2 | | | | | | | | | | | | | |
|---|---|---|---|---|---|---|---|---|---|---|---|---|---|---|---|---|---|---|
| | | | Cur-rent value lp (kA) | Energiza-tion time tp (ms) | Energiza-tion condition | First stage | | | Second stage | | | Third stage | | | Formu-la (1) *1 | Num-ber of stages n | Formu-la (2) 11 < In *1 |
| | | | | | | Cool-ing step | Energization step | | Cool-ing step | Energization step | | Cool-ing step | Energization step | | | | |
| | | | | | | Cool-ing time (ms) | Cur-rent value I1 (kA) | Energiza-tion time (ms) | Cool-ing time (ms) | Cur-rent value I2 (kA) | Energiza-tion time (ms) | Cool-ing time (ms) | Cur-rent value I3 (kA) | Energiza-tion time (ms) | | | |
| 15 | E | 5.0 | 7.0 | 300 | Constant | 20 | 9.0 | 40 | 20 | 9.0 | 40 | 20 | 9.0 | 40 | ○ | 3 | × |

*1. Each symbol "o" indicates that the current values satisfy the corresponding formula, and each symbol "×" indicates that the current values do not satisfy the corresponding formula.

*2. In the multistage energization in the second energization step, "the current value in the first stage" is denoted as 11, and the "current value in the n-th stage" is denoted as In.

[Table 2-2]

| Test No. | With no disturbance *3 | | | | With sheet gap *3 | | | | With existing welds *3 | | | | Judgment | Remarks |
|---|---|---|---|---|---|---|---|---|---|---|---|---|---|---|
| | Nugget diameter N1 after first energization step (Vt ratio) | Nugget diameter N2 after second energization step (√t ratio) | LME cracking | N2-N1 (Vt ratio) | Nugget diameter N1 after first energization step (Vt ratio) | Nugget diameter N2 after second energization step (Vt ratio) | LME cracking | N2-N1 (Vt ratio) | Nugget diameter N1 after first energization step (Vt ratio) | Nugget diameter N2 after second energization step (Vt ratio) | LME cracking | N2-N1 (Vt ratio) | | |
| 1 | 4.3 | 5.1 | No | 0.8 | 4.4 | 5.2 | No | 0.8 | 4.1 | 4.9 | No | 0.8 | o | Inventive Example |
| a | 4.3 | 5.1 | No | 0.8 | 4.4 | 5.1 | No | 0.7 | 4.1 | 5.0 | No | 0.9 | o | Inventive Example |
| b | 4.3 | 4.7 | No | 0.4 | 4.4 | 4.8 | No | 0.4 | 4.1 | 4.5 | No | 0.4 | o | Inventive Example |
| 2 | 3.3 | 5.0 | No | 1.7 | 3.4 | 5.1 | No | 1.7 | 3.0 | 4.9 | No | 1.9 | o | Inventive Example |
| 3 | 4.3 | 5.0 | No | 0.7 | 4.4 | 5.1 | No | 0.7 | 4.1 | 4.8 | No | 0.7 | o | Inventive Example |
| 4 | 4.3 | 4.7 | No | 0.4 | 4.4 | 4.8 | No | 0.4 | 4.1 | 4.4↓ | No | 0.3 | × | Comparative Example |
| 5 | 5.0 | 5.0 | No | 0.0 | 5.2 | 5.2 | Yes | 0.0 | 4.8 | 4.8 | No | 0.0 | × | Comparative Example |
| 6 | 4.6 | 4.6 | No | 0.0 | 4.8 | 4.8 | No | 0.0 | 4.2 | 4.2↓ | No | 0.0 | × | Comparative Example |
| 7 | 4.4 | 5.0 | No | 0.6 | 4.5 | 5.1 | No | 0.6 | 4.2 | 5.0 | No | 0.8 | o | Inventive Example |
| 8 | 4.4 | 4.4↓ | No | 0.0 | 4.5 | 4.6 | No | 0.1 | 4.2 | 4.2↓ | No | 0.0 | × | Comparative Example |
| c | 4.4 | 4.8 | No | 0.4 | 4.5 | 4.9 | No | 0.4 | 4.2 | 4.6 | No | 0.4 | o | Inventive Example |
| d | 4.4 | 4.6 | No | 0.2 | 4.5 | 4.7 | No | 0.2 | 4.2 | 4.4↓ | No | 0.2 | × | Comparative Example |

| Test No. | With no disturbance *3 | | | | With sheet gap *3 | | | | With existing welds *3 | | | | Judgment | Remarks |
|---|---|---|---|---|---|---|---|---|---|---|---|---|---|---|
| | Nugget diameter N1 after first energization step (Vt ratio) | Nugget diameter N2 after second energization step (√t ratio) | LME cracking | N2-N1 (Vt ratio) | Nugget diameter N1 after first energization step (Vt ratio) | Nugget diameter N2 after second energization step (Vt ratio) | LME cracking | N2-N1 (Vt ratio) | Nugget diameter N1 after first energization step (Vt ratio) | Nugget diameter N2 after second energization step (Vt ratio) | LME cracking | N2-N1 (Vt ratio) | | |
| 9 | 4.4 | 5.2 | Yes | 0.8 | 4.5 | 5.2 | Yes | 0.7 | 4.2 | 5.2 | Yes | 1.0 | × | Comparative Example |
| 10 | 4.3 | 5.0 | No | 0.7 | 4.5 | 5.1 | No | 0.6 | 4.0 | 4.9 | No | 0.9 | o | Inventive Example |
| 11 | 4.8 | 5.1 | No | 0.3 | 5.0 | 5.2 | Yes | 0.2 | 4.5 | 5.0 | No | 0.5 | × | Comparative Example |
| 12 | 4.2 | 5.0 | No | 0.8 | 4.3 | 5.1 | No | 0.8 | 4.0 | 4.9 | No | 0.9 | o | Inventive Example |
| 13 | 3.5 | 4.8 | No | 1.3 | 3.5 | 5.0 | No | 1.5 | 3.3 | 4.7 | No | 1.4 | o | Inventive Example |
| e | 4.2 | 4.8 | No | 0.6 | 4.3 | 5.0 | No | 0.7 | 4.0 | 4.7 | No | 0.7 | o | Inventive Example |
| f | 4.2 | 4.9 | No | 0.7 | 4.3 | 5.0 | Yes | 0.7 | 4.0 | 4.8 | No | 0.8 | × | Comparative Example |
| 14 | 3.5 | 4.7 | No | 1.2 | 3.5 | 4.8 | No | 1.3 | 3.9 | 4.4↓ | No | 0.5 | × | Comparative Example |
| 15 | 3.5 | 5.0 | No | 1.5 | 3.5 | 5.2 | Yes | 1.7 | 3.9 | 4.7 | No | 0.8 | × | Comparative Example |

*3. "↓" indicates that the nugget diameter after welding is less than 4.5√t (mm).

[Table 3-1]

| Test No. | Sheet set | Welding pressure (kN) | First energization step *3 | | | | | | | | | | Second energization step *2 | | | | | | | | | | | |
|---|---|---|---|---|---|---|---|---|---|---|---|---|---|---|---|---|---|---|---|---|---|---|---|---|
| | | | First stage | | Second stage | | Third stage | | Number of stages m | Formula (4) *1 | Formula (3) If > Is *1 | Energization condition | First stage | | | Second stage | | | Third stage | | | Formula (1) *1 | Number of stages n | Formula (2) I1 < In *1 |
| | | | Current value I1' (kA) | Energization time (ms) | Current value I2' (kA) | Energization time (ms) | Current value I3' (kA) | Energization time (ms) | | | | | Cooling step Cooling time (ms) | Energization step Current value I1 (kA) | Energization step Energization time (ms) | Cooling step Cooling time (ms) | Energization step Current value I2 (kA) | Energization step Energization time (ms) | Cooling step Cooling time (ms) | Energization step Current value I3 (kA) | Energization step Energization time (ms) | | | |
| 1 | A | 4.0 | 3.0 | 40 | 5.0 | 40 | 7.0 | 40 | 3 | ○ | ○ | Changed | 20 | 9.0 | 40 | 20 | 9.3 | 40 | 20 | 9.5 | 40 | ○ | 3 | ○ |
| g | A | 4.0 | 3.0 | 40 | 5.0 | 40 | 7.0 | 40 | 3 | ○ | ○ | Changed | 140 | 7.5 | 180 | 20 | 9.3 | 40 | - | - | - | ○ | 2 | ○ |
| h | A | 4.0 | 3.0 | 40 | 5.0 | 40 | 7.0 | 40 | 3 | ○ | ○ | Changed | 140 | 7.5 | 240 | 20 | 9.3 | 40 | - | - | - | ○ | 2 | ○ |
| 2 | A | 4.0 | 3.0 | 40 | 2.0 | 40 | 1.0 | 40 | 3 | × | × | Changed | 20 | 9.0 | 40 | 20 | 9.3 | 40 | 20 | 9.5 | 40 | ○ | 3 | ○ |
| 3 | A | 4.0 | 5.0 | 60 | 7.0 | 60 | - | - | 2 | ○ | ○ | Changed | 20 | 9.0 | 60 | 20 | 9.0 | 60 | 20 | 9.5 | 40 | ○ | 3 | ○ |
| 4 | B | 2.5 | 5.0 | 60 | 7.5 | 100 | - | - | 2 | ○ | ○ | Changed | 20 | 9.0 | 40 | 20 | 9.3 | 40 | 20 | 9.5 | 40 | ○ | 3 | ○ |
| 5 | C | 6.0 | 4.0 | 140 | 5.5 | 140 | 7.0 | 140 | 3 | ○ | ○ | Changed | 40 | 8.0 | 60 | 20 | 10.0 | 40 | 20 | 10.5 | 40 | ○ | 3 | ○ |
| 6 | A | 4.0 | 3.0 | 40 | 5.0 | 40 | 7.0 | 40 | 3 | ○ | ○ | Changed | 20 | 8.5 | 40 | 20 | 8.5 | 40 | 20 | 8.0 | 40 | × | 3 | × |

*1. Each symbol "○" indicates that the current values satisfy the corresponding formula, and each symbol "×" indicates that the current values do not satisfy the corresponding formula.

*2. In the multistage energization in the second energization step, "the current value in the first stage" is denoted as I1, and the "current value in the n-th stage" is denoted as In.

*3. In the multistage energization in the first energization step, "the current value Is at the start of the energization" is the current value (I1') in the first stage, and "the current value If at the end of the energization" is the current value (Im') in the final stage (m-th stage).

[Table 3-2]

| Test No. | With no disturbance *4 | | | | With sheet gap *4 | | | | With existing welds *4 | | | | Judgment | Remarks |
|---|---|---|---|---|---|---|---|---|---|---|---|---|---|---|
| | Nugget diameter N1 after first energization step (Vt ratio) | Nugget diameter N2 after second energization step (Vt ratio) | LME cracking | N2-N1 (Vt ratio) | Nugget diameter N1 after first energization step (Vt ratio) | Nugget diameter N2 after second energization step (Vt ratio) | LME cracking | N2-N1 (Vt ratio) | Nugget diameter N1 after first energization step (Vt ratio) | Nugget diameter N2 after second energization step (Vt ratio) | LME cracking | N2-N1 (Vt ratio) | | |
| 1 | 4.3 | 5.0 | No | 0.7 | 4.4 | 5.1 | No | 0.7 | 4.1 | 4.9 | No | 0.8 | o | Inventive Example |
| 9 | 4.3 | 4.7 | No | 0.4 | 4.4 | 4.8 | No | 0.4 | 4.1 | 4.6 | No | 0.5 | o | Inventive Example |
| h | 4.3 | 4.9 | No | 0.6 | 4.4 | 4.9 | Yes | 0.5 | 4.1 | 4.8 | No | 0.7 | × | Comparative Example |
| 2 | 2.5 | 4.3↓ | No | 1.8 | 2.8 | 4.5 | No | 1.7 | 2.0 | 4.1↓ | No | 2.1 | × | Comparative Example |
| 3 | 4.4 | 5.0 | No | 0.6 | 4.5 | 5.1 | No | 0.6 | 4.0 | 4.8 | No | 0.8 | o | Inventive Example |
| 4 | 4.4 | 5.0 | No | 0.6 | 4.5 | 5.1 | No | 0.6 | 4.1 | 4.9 | No | 0.8 | o | Inventive Example |
| 5 | 4.0 | 5.0 | No | 1.0 | 4.0 | 5.1 | No | 1.1 | 3.7 | 4.9 | No | 1.2 | o | Inventive Example |
| 6 | 4.3 | 4.6 | No | 0.3 | 4.4 | 4.7 | No | 0.3 | 4.0 | 4.3↓ | No | 0.3 | × | Comparative Example |

*4. "↓" indicates that the nugget diameter after welding is less than 4.5√t (mm).

[Table 4-1]

| Test No. | Sheet set | Welding pressure (kN) | First energization step | | | | | Second energization step *2 | | | | | | | | | For-mula (1) *1 | Number of stages n | For-mula (2) I1 < In *1 |
| | | | Up-slope start current Is (kA) | Up-slope end current If (kA) | Energiza-tion time (ms) | Formula (3) If > Is *1 | Energiza-tion condition | First stage | | | Second stage | | | Third stage | | | | | |
| | | | | | | | | Cooling step | Energization step | | Cooling step | Energization step | | Cooling step | Energization step | | | | |
| | | | | | | | | Cooling time (ms) | Current value I1 (kA) | Energiza-tion time (ms) | Cooling time (ms) | Current value I2 (kA) | Energiza-tion time (ms) | Cooling time (ms) | Current value I3 (kA) | Energiza-tion time (ms) | | | |
| 1 | A | 4.0 | 3.0 | 7.0 | 120 | ○ | Changed | 20 | 9.0 | 40 | 20 | 9.5 | 40 | 20 | 9.5 | 40 | ○ | 3 | ○ |
| 2 | A | 4.0 | 5.0 | 3.0 | 120 | × | Changed | 20 | 9.0 | 40 | 20 | 9.3 | 40 | 20 | 9.5 | 40 | ○ | 3 | ○ |
| 3 | C | 6.0 | 4.0 | 7.5 | 460 | ○ | Changed | 20 | 9.0 | 60 | 20 | 100 | 40 | 20 | 100 | 40 | ○ | 3 | ○ |
| 4 | A | 4.0 | 3.0 | 7.0 | 120 | ○ | Changed | 20 | 8.0 | 40 | 20 | 7.5 | 40 | 20 | 7.0 | 40 | × | 3 | × |

*1. Each symbol "o" indicates that the current values satisfy the corresponding formula, and each symbol "×" indicates that the current values do not satisfy the corresponding formula.

*2. In the multistage energization in the second energization step, "the current value in the first stage" is denoted as I1, and the "current value in the n-th stage" is denoted as In.

[Table 4-2]

| Test No. | With no disturbance *3 | | | | With sheet gap *3 | | | | With existing welds *3 | | | | Judgment | Remarks |
|---|---|---|---|---|---|---|---|---|---|---|---|---|---|---|
| | Nugget diameter N1 after first energization step (Vt ratio) | Nugget diameter N2 after second energization step (Vt ratio) | LME cracking | N2-N1 (Vt ratio) | Nugget diameter N1 after first energization step (Vt ratio) | Nugget diameter N2 after second energization step (Vt ratio) | LME cracking | N2-N1 (Vt ratio) | Nugget diameter N1 after first energization step (Vt ratio) | Nugget diameter N2 after second energization step (Vt ratio) | LME cracking | N2-N1 (Vt ratio) | | |
| 1 | 4.3 | 5.0 | No | 0.7 | 4.4 | 5.1 | No | 0.7 | 4.1 | 4.8 | No | 0.7 | o | Inventive Example |
| 2 | 2.8 | 4.2↓ | No | 1.4 | 2.9 | 4.3↓ | No | 1.4 | 2.6 | 4.1↓ | No | 1.5 | × | Comparative Example |
| 3 | 4.2 | 5.0 | No | 0.8 | 4.3 | 5.1 | No | 0.8 | 4.0 | 4.9 | No | 0.9 | o | Inventive Example |
| 4 | 4.3 | 4.6 | No | 0.3 | 4.4 | 4.7 | No | 0.3 | 4.1 | 4.3↓ | No | 0.2 | × | Comparative Example |

*3. "↓" indicates that the nugget diameter after welding is less than 4.5√t (mm).

EP 4 494 800 A1

As can be seen from Tables 2-1 to 4-2, in the Inventive Examples, good welded joints having no cracking and having the target nugget diameter were obtained irrespective of the disturbance conditions. However, in Comparative Examples, good welded joints were not obtained.

Reference Signs List

| 1 | upper steel sheet |
|---|---|
| 2 | lower steel sheet |
| 3 | upper electrode |
| 4 | lower electrode |
| 5 | nugget |
| 6 | weld |
| 7, 8 | spacer |
| 9, 10 | existing weld |

**Claims**

1. A resistance spot welding method comprising: disposing two or more steel sheets including at least one zinc-based coated steel sheet so as to overlap each other; and joining the steel sheets together by resistance spot welding,

   wherein the resistance spot welding includes a first energization step and a second energization step,
   wherein, in the first energization step, a current value and an energization time are set such that a nugget having a nugget diameter of $3.0\sqrt{t}$ (mm) or more and $4.5\sqrt{t}$ (mm) or less is formed, where t is the thickness (mm) of a thinnest steel sheet among the overlapping steel sheets,
   wherein the second energization step is multistage energization including first to n-th stages (n is an integer of 2 or more) each including a cooling step of maintaining a non-energization state for 10 ms or longer and shorter than 160 ms and an energization step of energizing the steel sheets for 20 ms or longer and shorter than 200 ms,
   wherein, in the multistage energization, a current value in the energization step in the first stage is denoted as I1 (kA), and a current value in the energization step in the n-th stage is denoted as In (kA), and
   wherein the current value I1 in the first stage is equal to or more than the current value in the first energization step, and the current values I1 to In in the first to n-th stages satisfy formulas (1) and (2):

$$I1 \leq I2 \leq \cdots \leq In, \quad (1)$$

$$I1 < In. \quad (2)$$

2. The resistance spot welding method according to claim 1, wherein, in the first energization step, a current value at a start of energization is denoted as Is (kA), and a current value at an end of the energization is denoted as If (kA), and

   wherein the energization in the first energization step is performed such that the current value is constant from the start of the energization to the end of the energization, or
   the energization in the first energization step is performed while the current value is changed such that the current value Is at the start of the energization and the current value If at the end of the energization satisfy formula (3):

$$If > Is. \quad (3)$$

3. The resistance spot welding method according to claim 2, wherein, when the energization in the first energization step is performed while the current value is changed, the first energization step is multistage energization including first to m-th stages (m is an integer of 2 or more),

   wherein current values in the first to m-th stages in the multistage energization are denoted as I1' to Im' (kA), the current value I1' in the first stage being the same as the current value Is at the start of the energization, the current value Im' in the m-th stage being the same as the current value If at the end of the energization, and
   wherein the current values I1' to Im' in the first to m-th stages in the multistage energization satisfy formula (4) :

$$I1' < I2' < I3' < \cdots < Im'. \qquad (4)$$

4. The resistance spot welding method according to claim 2, wherein, when the energization in the first energization step is performed while the current value is changed, the energization is upslope energization in which the current value is continuously increased from the current value Is at the start of the energization to the current value If at the end of the energization.

5. The resistance spot welding method according to any one of claims 1 to 4, wherein the diameter of a nugget formed at the completion of the first energization step is denoted as N1 (mm), and the diameter of the nugget formed at the completion of the first energization step and the second energization step is denoted as N2 (mm), and wherein the amount of increase in the diameter of the nugget in the second energization step is represented by (N2 - N1) and is $0.1\sqrt{t}$ (mm) or more.

6. The resistance spot welding method according to any one of claims 1 to 4, wherein the zinc-based coated steel sheet is a high strength steel sheet having a Ceq represented by formula (5) of 0.20% or more and a tensile strength of 780 MPa or more:

$$Ceq\ (\%)\ =\ C\ +\ Si/30\ +\ Mn/20\ +\ 2P\ +\ 4S, \qquad (5)$$

where element symbols in formula (5) represent the contents (% by mass) of respective elements.

7. The resistance spot welding method according to claim 5, wherein the zinc-based coated steel sheet is a high strength steel sheet having a Ceq represented by formula (5) of 0.20% or more and a tensile strength of 780 MPa or more:

$$Ceq\ (\%)\ =\ C\ +\ Si/30\ +\ Mn/20\ +\ 2P\ +\ 4S, \qquad (5)$$

where element symbols in formula (5) represent the contents (% by mass) of respective elements.

FIG. 1

FIG. 2

FIG. 3

# FIG. 4

# FIG. 5

# FIG. 6

## FIG. 7

## FIG. 8

<div align="center">

**INTERNATIONAL SEARCH REPORT**

</div>

| | International application No. |
|---|---|
| | **PCT/JP2023/019968** |

**A. CLASSIFICATION OF SUBJECT MATTER**

**B23K 11/16**(2006.01)i; **B23K 11/24**(2006.01)i
FI: B23K11/16 311; B23K11/24 315

According to International Patent Classification (IPC) or to both national classification and IPC

**B. FIELDS SEARCHED**

Minimum documentation searched (classification system followed by classification symbols)

B23K11/16; B23K11/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-207909 A (SUMITOMO METAL IND LTD) 24 September 2010 (2010-09-24) paragraphs [0041]-[0064], [0075]-[0081], fig. 8, 10 | 1 |
| Y | | 6 |
| A | | 2-5, 7 |
| Y | JP 2017-047475 A (NIPPON STEEL & SUMITOMO METAL CORP) 09 March 2017 (2017-03-09) paragraph [0077] | 6 |
| A | WO 2019/124464 A1 (NIPPON STEEL CORP) 27 June 2019 (2019-06-27) entire text, all drawings | 1-7 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 July 2023** | **18 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

International application No.

**PCT/JP2023/019968**

| Patent document cited in search report | | | Publication date (day/month/year) | Patent family member(s) | | Publication date (day/month/year) |
|---|---|---|---|---|---|---|
| JP | 2010-207909 | A | 24 September 2010 | (Family: none) | | |
| JP | 2017-047475 | A | 09 March 2017 | US 2018/0243853 A1 paragraph [0121] EP 3345711 A1 KR 10-2018-0034561 A CN 108025387 A | | |
| WO | 2019/124464 | A1 | 27 June 2019 | (Family: none) | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003103377 A
- JP 2003236676 A
- JP 2017047476 A
- JP 2012187639 A